# EUROPÄISCHE PATENTSCHRIFT

(11) **EP 2 666 173 B1**
(45) Veröffentlichungstag und Bekanntmachung des Hinweises auf die Patenterteilung: **27.04.2016**
(21) Anmeldenummer: 12700593.2
(22) Anmeldetag: 04.01.2012
(51) Int. Cl.: H01H 9/00, H01H 33/16, H01H 33/664, H01H 33/662

(54) **STUFENSCHALTER MIT VAKUUMSCHALTRÖHREN**
TAP CHANGER HAVING VACUUM INTERRUPTERS
CHANGEUR DE PRISES EN CHARGE À AMPOULES À VIDE

(30) Priorität: 19.01.2011 DE 102011008959
(43) Veröffentlichungstag der Anmeldung: 27.11.2013
(73) Patentinhaber: Maschinenfabrik Reinhausen GmbH, 93059 Regensburg (DE); Siemens Aktiengesellschaft, 80333 München (DE)
(72) Erfinder: ALBRECHT, Wolfgang, 93173 Wenzenbach (DE); HAMMER, Christian, 93059 Regensburg (DE); HEYNEN, Christoph, 93173 Wenzenbach (DE); FROTSCHER, Rainer, 93128 Regenstauf (DE); KOTZ, Christian, 93489 Schorndorf (DE); SACHSENHAUSER, Andreas, 84066 Mallersdorf-Pfaffenberg (DE); PIRCHER, Christian, 93138 Lappersdorf (DE); HARTMANN, Werner, 91085 Weisendorf (DE); KOSSE, Sylvio, 91052 Erlangen (DE); LAWALL, Andreas, 13505 Berlin (DE); WENZEL, Norbert, 91056 Erlangen (DE); STELZER, Andreas, 13505 Berlin (DE); RENZ, Roman, 12355 Berlin (DE); TEICHMANN, Jörg, 63755 Alzenau (DE)
(86) Internationale Anmeldenummer: PCT/EP2012/000016
(87) Internationale Veröffentlichungsnummer: WO 2012/097957

(56) Entgegenhaltungen:
- EP-A1- 0 258 614
- DE-A1-102007 004 530

## Beschreibung

Die Erfindung betrifft einen Stufenschalter mit Vakuumschaltröhren zur unterbrechungslosen Umschaltung zwischen Wicklungsanzapfungen eines Stufentransformators.

Aus der DE 20 21 575 ist ein Stufenschalter bekannt, der insgesamt vier Vakuumschaltröhren pro Phase aufweist. In jedem der beiden Lastzweige sind jeweils eine Vakuumschaltröhre als Hauptkontakt und jeweils eine weitere Vakuumschaltröhre, in Reihenschaltung mit einem Überschaltwiderstand, als Widerstandskontakt vorgesehen.

Bei einer unterbrechungslosen Lastumschaltung von der bisherigen Wicklungsanzapfung n auf eine neue, vorgewählte Wicklungsanzapfung n+1 wird zunächst der Hauptkontakt der abschaltenden Seite geöffnet, darauf schließt der Widerstandskontakt der übernehmenden Seite, so dass zwischen den beiden Stufen n und n+1 ein durch die Überschaltwiderstände begrenzter Ausgleichsstrom fließt.

Nachdem der bisher geschlossene Widerstandskontakt der abschaltenden Seite geöffnet hat, schließt dann der Hauptkontakt der übernehmenden Seite, so dass der gesamte Laststrom von der neuen Wicklungsanzapfung n+1 zur Lastableitung führt; die Umschaltung ist beendet.

Bei verschiedenen Anwendungsfällen solcher bekannter Stufenschalter mit Vakuumschaltröhren zur Regelung von Leistungstransformatoren ist jedoch eine hohe Stoßspannungsfestigkeit, bis zu 100 kV und deutlich darüber hinaus, erforderlich. Solche unerwünschten Stoßspannungen, deren Höhe wesentlich durch den Aufbau des Stufentransformators und der Wicklungsteile zwischen den einzelnen Anzapfstufen bedingt ist, sind zum einen Blitzstoßspannungen, die sich durch das Einschlagen von Blitzen im Netz ergeben. Zum anderen können auch Schaltstoßspannungen auftreten, die durch nicht vorhersehbare Schaltstöße im zu regelnden Netz verursacht sind.

Bei nicht ausreichender Stoßspannungsfestigkeit des Stufenschalters kann es zu einem kurzzeitigem Stufenkurzschluss bzw. unerwünschtem Durchschlag an der Keramik bzw. dem Dampfschirm von Vakuumschaltröhren im nicht den Laststrom führenden Lastzweig kommen, was nicht nur deren Langzeitschädigung verursachen kann, sondern generell unerwünscht ist.

Dies führt in vielen Fällen bei der Auslegung der Schaltstrecken und damit insbesondere auch der Vakuumschaltröhren zur Überdimensionierung, damit diese mit Sicherheit der beschriebenen Spannungsbeanspruchung standhalten. Sowohl der heute bei modernen Geräten zur Verfügung stehende geringe Bauraum, als auch die Wirtschaftlichkeit sowie Verfügbarkeit solcher Vakuumschaltröhren lassen eine solche Überdimensionierung nachteilig erscheinen.

In der nicht vorveröffentlichten DE 10 2010 024 255 wird daher ein Stufenschalter vorgeschlagen, bei dem eine erste Wicklungsanzapfung eines ersten Hauptstromzweiges über eine Reihenschaltung, bestehend aus einem ersten mechanischen Umschalter und einem ersten Schaltmittel, d. h. einer Vakuumschaltröhre oder alternativ einem Halbleiterbauelement, mit einer Lastableitung verbunden ist. In analog symmetrischer Bauweise dazu wird eine zweite Wicklungsanzapfung eines zweiten Hauptstromzweiges über eine Reihenschaltung, bestehend aus einem zweiten mechanischen Umschalter und einem zweiten Schaltmittel, d. h. einer zweiten Vakuumschaltröhre oder alternativ einem zweiten Halbleiterbauelement, ebenfalls mit der Lastableitung verbunden. Weiterhin ist zwischen der ersten Wicklungsanzapfung und dem ersten mechanischen Umschalter ein erster Hilfsstromzweig mit einem eingeschleiften Widerstand abgezweigt, mittels dem eine elektrische Verbindung mit dem zweiten mechanischen Umschalter des zweiten Hauptstromzweiges herstellbar ist und zwischen der zweiten Wicklungsanzapfung und dem zweiten mechanischen Umschalter ein zweiter Hilfsstromzweig mit einem weiteren eingeschleiften Widerstand abgezweigt, mittels dem eine elektrische Verbindung mit dem ersten mechanischen Umschalter des ersten Hauptstromzweiges herstellbar ist.

Mit anderen Worten: Es befindet sich also bei dem bekannten Stufenschalter in jedem Haupt- und Hilfsstromzweig ein mit der jeweiligen Vakuumschaltröhre in Reihe geschalteter mechanischer Umschalter, der eine vollständig galvanische Trennung der jeweils nicht beschalteten Wicklungsanzapfung, und damit eine hohe Stoßspannungsfestigkeit, sicherstellt.

Alle aus dem Stand der Technik bekannten Stufenschalter benötigen mehrere Vakuumschaltröhren und zusätzliche mechanische Schaltermittel pro Phase, was auf Grund des hohen Platzbedarfs der einzelnen Schaltmittel und des damit einhergehenden konstruktiven und mechanischen Aufwandes nachteilig und vor allem teuer ist. Nicht zuletzt auch deshalb, weil für einen Umschaltvorgang eine Vielzahl von erforderlichen Einzelbauteilen in den Stufenschaltern zur Schaltsequenzrealisierung notwendig sind, die dann innerhalb weniger zehntel Sekunden in einem zeitlich exakt definierten Umschaltvorgang ineinandergreifen müssen.

Aufgabe der vorliegenden Erfindung ist es daher, einen Stufenschalter mit Vakuumschaltröhren zur unterbrechungslosen Umschaltung zwischen Wicklungsanzapfungen eines Stufentransformators anzugeben, der eine Reduzierung der Komplexität und der erforderlichen Einzelbauteile ermöglicht, dabei insbesondere mechanische Schaltmittel entbehrlich macht und zudem jedoch eine hohe Stoßspannungsfestigkeit aufweist.

Diese Aufgabe wird durch einen Stufenschalter mit Vakuumschaltröhren mit den Merkmalen des ersten Patentanspruches gelöst. Die Unteransprüche betreffen dabei besonders bevorzugte Weiterbildungen der Erfindung.

Dem erfindungsgemäßen Stufenschalter mit Vakuumschaltröhren liegt die allgemeine Idee zugrunde, in nur einer einzigen Vakuumschaltröhre mit zwei separat beweglichen Kontaktsystemen die Funktionalitäten von mindestens einem herkömmlichen, unter Last schaltenden Vakuumschaltkontakt und einem weiteren, nach dem Stand der Technik mechanischen Schaltmittel zu kombinieren. Mit anderen Worten: Es werden bei dem erfindungsgemäßen Stufenschalter die mindestens zwei bisher separat erforderlichen Schaltmittel, nämlich die mindestens eine unter Last schaltende Vakuumschaltröhre und das eine weitere mechanische Schaltmittel, nicht mehr, wie nach dem Stand der Technik, als einzelne Baugruppen ausgeführt und in dem Stufenschalter separat verbaut, sondern in nur einer einzigen Vakuumschaltröhre mit zwei Vakuumschaltkontakten zusammengefasst. Das mechanische Schaltmittel, das jetzt bei dem erfindungsgemäßen Stufenschalter integraler Bestandteil der Vakuumschaltröhre ist, kann dabei sowohl als einfacher Ein-, Ausschalter als auch als Umschalter wirken.

Nach einer bevorzugten Ausführungsform der Erfindung sind die Schaltkammern der Vakuumschaltröhre für den unter Last schaltenden Vakuumschaltkontakt und den weiteren, lastlos schaltenden Vakuumschaltkontakt, der funktional das bisher mechanische Schaltmittel ersetzt, jeweils in einer separat und gegenseitig dicht ausgeführten Vakuumkammer angeordnet. Damit wird die dauerhafte dielektrische Festigkeit der Vakuumkammer, der das mechanische Schaltmittel ersetzende Vakuumschaltkontakt, sichergestellt, da sich in dieser Vakuumkammer an den Isolierstrecken keine in Folge einer unter Last ausgeführten Umschaltung entstehende Bedampfung abscheiden kann.

Vakuumschaltröhren mit zwei Kontaktstellen sind an sich bereits bekannt.

Die DE 3344367 betrifft eine Vakuumschaltröhre mit zwei elektrisch in Reihe geschalteten Kontaktpaaren in einem einzigen Vakuumraum, die gleichzeitig betätigbar sind.

Die DE 197 56 308 C1 betrifft eine ähnliche Vakuumschaltröhre mit zwei auf einer gemeinsamen Achse angeordneten Schaltstrecken, wobei innenliegende Kontaktdruckfedern vorgesehen sind.

Die EP 0 258 614 B1 beschreibt die Kombination einer Vakuumschaltröhre und einer spezifischen Beschaltung an einem Stufenschalter. Hierbei sind mehrere Schaltstrecken in einem Vakuumraum angeordnet, was einen komplizierten Aufbau der Vakuumschaltröhre mit ringförmigen Festkontakten bedingt.

Die DE 10 2006 033 422 B3 schließlich beschreibt eine weitere Vakuumschaltröhre mit mehrfacher Funktionalität, wobei auch hier sowohl ringförmige Festkontakte als auch innenliegende Kontaktdruckfedern erforderlich sind.

Die Erfindung soll nachstehend an Hand von Figuren noch beispielhaft näher erläutert werden.

Es zeigen:
- Figur 1: einen Stufenschalter nach dem Stand der Technik
- Figur 2: eine erfindungsgemäße Vakuumschaltröhre für einen Stufenschalter in einer schematischen Darstellung
- Figur 3: eine Ausführungsform einer erfindungsgemäßen Vakuumschaltröhre für einen Stufenschalter in einer schematischen Ausführungsform
- Figur 4: einen weiteren aus dem Stand der Technik bekannten Stufenschalter
- Figur 5: eine weitere Ausführungsform einer erfindungsgemäßen Vakuumschaltröhre für einen Stufenschalter.

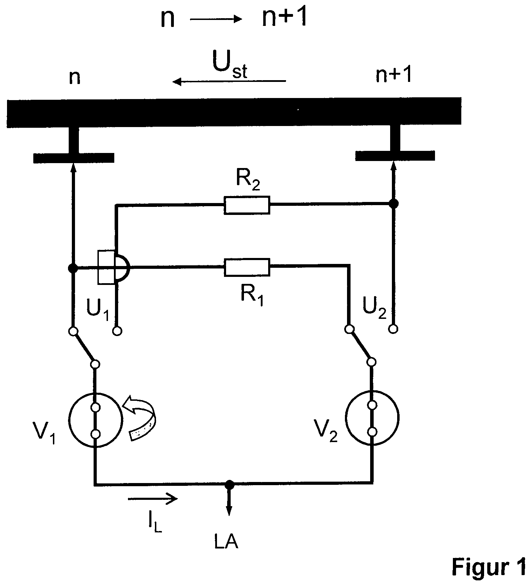

In Figur 1 ist ein aus dem Stand der Technik bekannter Stufenschalter dargestellt. Der Wähler des Stufenschalters, der vor der eigentlichen Lastumschaltung die leistungslose Anwahl der neuen Wicklungsanzapfung, hier n+1, auf die umgeschaltet werden soll, vornimmt, ist nicht gezeigt. Der Lastumschalter hat zwei Lastzweige A und B, die jeweils mit einer Wicklungsanzapfung n bzw. n+1 elektrisch in Verbindung stehen. Der Stufenschalter besitzt in jedem Lastzweig einen Hauptstromzweig und einen Hilfsstromzweig.

Der erste Hauptstromzweig stellt eine elektrische Verbindung von der Wicklungsanzapfung n über einen mechanischen Umschalter U1 und einer dazu in Reihe geschalteten Vakuumschaltröhre V1 zur Lastabteilung LA her. In analog symmetrischer Bauweise dazu, stellt der zweite Hauptstromzweig eine elektrische Verbindung von der Wicklungsanzapfung n über einen in Reihe geschalteten mechanischen Umschalter U2 und eine Vakuumschaltröhre V2 ebenfalls zur Lastableitung LA her.

Zwischen der Wicklungsanzapfung n und dem mechanischen Umschalter U1 des ersten Hauptstromzweiges ist ein erster Hilfsstromzweig mit einem eingeschleiften Widerstand R1 abgezweigt, mittels dem eine elektrische Verbindung mit dem mechanischen Umschalter U2 des zweiten Hauptstromzweiges herstellbar ist. In wiederum analoger Bauweise dazu ist zwischen der Wicklungsanzapfung n+1 und dem mechanischen Umschalter U2 des zweiten Hauptstromzweiges ein zweiter Hilfsstromzweig mit einem eingeschleiften Widerstand R2 abgezweigt, mittels dem eine elektrische Verbindung mit dem mechanischen Umschalter U1 des ersten Hauptstromzweiges herstellbar ist. Abhängig von der Stellung der jeweiligen Schaltmittel kann damit der erste Hilfsstromzweig eine elektrisch leitende Verbindung von der Wicklungsanzapfung n über den Widerstand R1 und die dazu in Reihe geschalteten Schaltmittel, nämlich dem mechanischen Umschalter U2 und der Vakuumschaltröhre V2, zur Lastableitung LA herstellen, der zweite Hilfsstromzweig von der Wicklungsanzapfung n+1 über den Widerstand R2 und die in Reihe dazu geschalteten Schaltmittel, nämlich dem mechanischen Umschalter U1 und der Vakuumschaltröhre V1.

In Figur 1 ist der stationäre Betrieb der beschalteten Wicklungsanzapfung n gezeigt, bei der der Laststrom von der Wicklungsanzapfung n über den mechanischen Umschalter U1 und die geschlossene Vakuumröhre V1 direkt zur Lastableitung LA fließt. Da der Strom den Weg des geringsten inneren Leitungswiderstandes wählt, fließt nur ein vernachlässigbar geringer Anteil des Laststromes von der Wicklungsanzapfung n über den abgezweigten ersten Hilfsstromzweig zur Lastableitung LA.

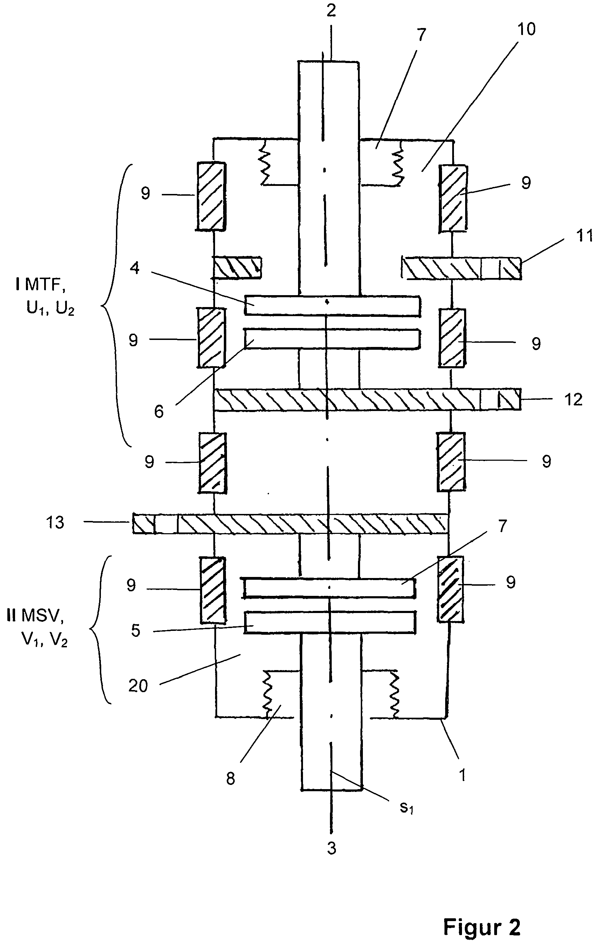

Figur 2 zeigt eine erfindungsgemäße Vakuumschaltröhre. Sie weist zwei separate, in getrennten Vakuumkammern 10 und 20 angeordnete, Kontaktsysteme I und II auf, wobei das Kontaktsystem I einen in Figur 1 mit U1 bzw. U2 bezeichneten mechanischen Umschalter und das Kontaktsystem II eine in Figur 1 mit V1 bzw. V2 bezeichnete Vakuumschaltröhre realisiert. Dabei ist ein gemeinsames, die gesamte Vakuumschaltröhre umschließendes Gehäuse 1 vorgesehen. Zentrisch in der rotationssymmetrischen Längsachse s1 ist ein oberer beweglicher Stößel 2 und am entgegengesetzten Ende ein unterer beweglicher Stößel 3 vorgesehen, die im inneren des Gehäuses 1 auf an sich bekannte Weise Kontaktstücke 4 und 5 tragen. Beide Kontaktstücke 4 und 5 können separat und unabhängig voneinander durch Betätigung der jeweiligen Stößel 2 bzw. 3 mit einem entsprechenden festen Kontakten 6 bzw. 7 elektrisch in Verbindung gebracht werden. Auf der dem festen Kontakt 6 gegenüberliegenden Seite kann nur der bewegliche Kontakt 4 mit einem weiteren Kontakt 11 in Verbindung gebracht werden. Zudem ist der obere feste Kontakt 6 mit einer ersten oberen Platte 12 elektrisch verbunden und der untere feste Kontakt 7 mit einer zweiten unteren Platte 13. Die beiden Platten 12 und 13 ragen derart über die seitliche Wandung des Gehäuses 1, so dass daran elektrische Anschlüsse angebracht werden können. Die bekannten Kontaktfedern, die mit den Stößeln 2 und 3 zusammenwirken, sind hier aus Übersichtlichkeitsgründen nicht dargestellt. Dargestellt ist jedoch ein oberer Faltenbalg 7 und ein unterer Faltenbalg 8, die gleich oder auch unterschiedlich ausgebildet sein können. Dargestellt sind hier zudem noch mehrere Isolierkeramiken 9.

Damit wird also mit der erfindungsgemäßen Vakuumschaltröhre im Kontaktsystem I ein mechanischer Umschalter funktional durch einen lastlos schaltenden Vakuumschaltkontakt ersetzt. Spiegelt man die beschriebene Vakuumschaltröhre auf einen Stufenschalter der Figur 1, so werden erfindungsgemäß die beiden bisher separaten Schaltelemente V1 und U1, bzw. V2 und U2 in nun einer einzigen Vakuumschaltröhre mit den getrennt steuerbaren Kontaktsystemen I und II zusammengefasst. Wird der Kontakt 11 der erfindungsgemäßen Vakuumschaltröhre über einen Widerstand R2 mit der Wicklungsanzapfung n+1, die obere elektrisch leitende Platte 12 mit der Wicklungsanzapfung n, die untere elektrisch leitende Platte 13 mit der Lastableitung LA und zwischen der unteren Platte 13 und dem oberen Stößel 2 eine elektrisch leitende Verbindung geschaffen, so lässt sich dadurch der in Figur 1 beschriebene Stufenschalter besonders einfach mechanisch realisieren.

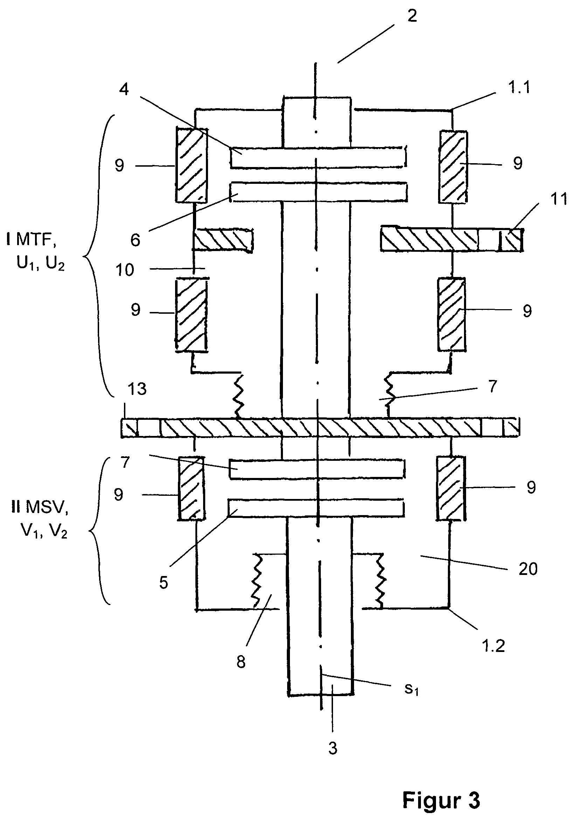

In Figur 3 ist eine erste Ausführungsform einer erfindungsgemäßen Vakuumschaltröhre gezeigt. Abweichend zu Figur 2 ist bei der Ausführungsform der Figur 3 das umschließende Gehäuse 1 zweiteilig ausgebildet, derart, dass das Kontaktsystem I von einem ersten Gehäuseteil 1.1 und das Kontaktsystem II von einem zweiten Gehäuseteil 2.2 umschlossen wird. Der obere Stößel 2 ist dabei fest mit dem ersten Gehäuseteil 1.1 verbunden, so dass dadurch eine entlang der Symmetrieachse s1 ausgeführte Bewegung des Stößels 2 auf den ersten Gehäuseteil 1.1 übertragen werden kann und bei entsprechender Schaltstellung der obere feste Kontakt 6 entweder mit dem Kontakt 11 oder dem beweglichen Kontaktstück 4 beschaltbar ist. Zudem stehen der obere feste Kontakt 6 und der untere feste Kontakt 7 dauerhaft elektrisch miteinander in Verbindung.

Auch bei dieser Ausführungsform wird mit der erfindungsgemäßen Vakuumschaltröhre im Kontaktsystem I ein mechanischer Umschalter funktional durch einen lastlos schaltenden Vakuumschaltkontakt ersetzt. Wird der Kontakt 11 der erfindungsgemäßen Vakuumschaltröhre mit der Wicklungsanzapfung n, der obere Stößel 2 über einen Widerstand R2 mit der Wicklungsanzapfung n+1 und der untere Stößel 3 mit der Lastableitung LA verbunden, so lässt sich dadurch der in Figur 1 beschriebene Stufenschalters besonders einfach mechanisch realisieren.

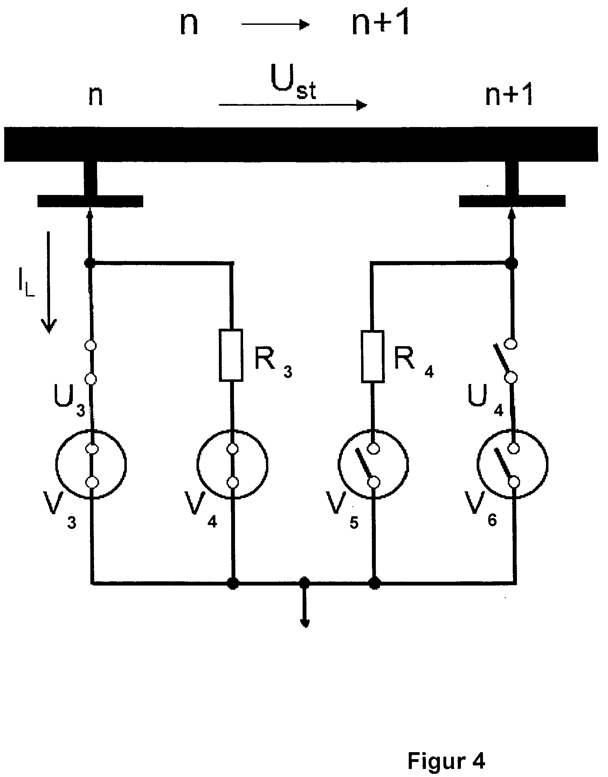

In Figur 4 ist ein weiterer aus dem Stand der Technik bekannter Stufenschalters gezeigt. Er weist einen ersten Lastzweig auf, in dem sich eine als Hauptkontakt wirkende Vakuumschaltröhre V₃ und ein in Reihe dazu geschalteter mechanischer Umschalter U₃ sowie parallel dazu ein Überschaltwiderstand R₃ sowie eine als Widerstandskontakt wirkende Vakuumschaltröhre V₄ befinden. Der zweite Lastzweig besitzt ganz analog eine Vakuumschaltröhre V₆ und einen in Reihe dazu geschalteten mechanischen Umschalter U₄ sowie parallel dazu einen weiteren Überschaltwiderstand R₄ und eine Vakuumschaltröhre V₅.

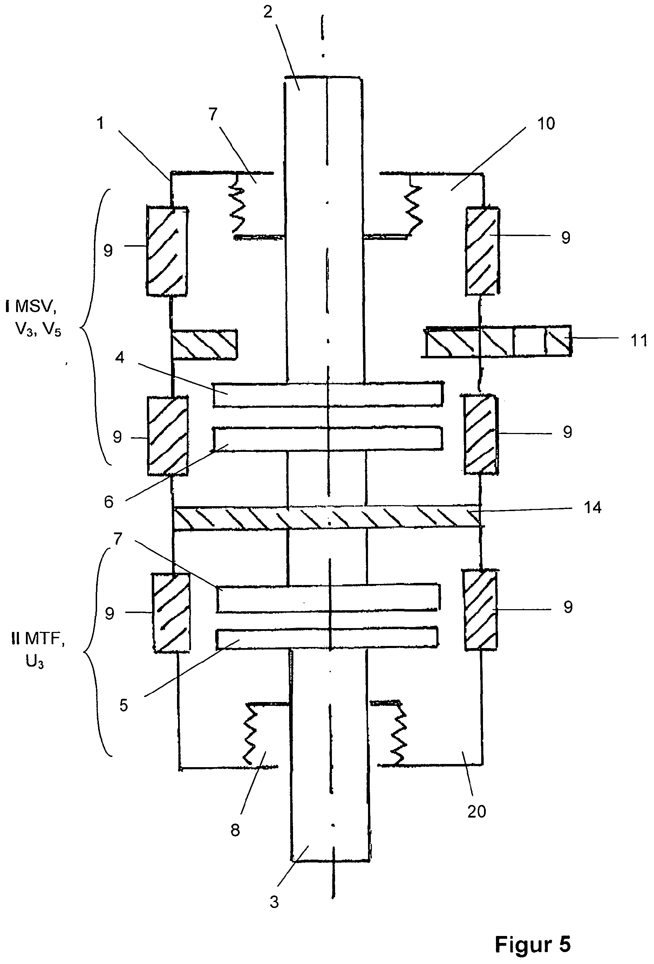

Figur 5 zeigt eine nochmals weitere Ausführungsform einer Vakuumschaltröhre, bei der das Kontaktsystem I die beiden Vakuumschaltröhren V3 und V5, bzw. V6 und V4 des Stufenschalters der Figur 4 funktional ersetzt und das Kontaktsystem II den jeweils dazugehörigen Umschalter U3, bzw. U4 bildet. Auch diese Ausführungsform weist zwei räumlich getrennte Vakuumkammern 10 und 20 auf, die das jeweilige Kontaktsystem I bzw. II aufnehmen. Dabei ist ein gemeinsames, die gesamte Vakuumschaltröhre umschließendes Gehäuse 1 vorgesehen. Zentrisch in der rotationssymmetrischen Längsachse s1 ist ein oberer beweglicher Stößel 2 und am entgegengesetzten Ende ein unterer beweglicher Stößel 3 vorgesehen, die im inneren des Gehäuses 1 auf an sich bekannte Weise Kontaktstücke 4 und 5 tragen. Beide Kontaktstücke 4 und 5 können separat und unabhängig voneinander durch Betätigung der jeweiligen Stößel 2 bzw. 3 mit einem entsprechenden festen Kontakten 6 bzw. 7 elektrisch in Verbindung gebracht werden. Auf der dem festen Kontakt 6 gegenüberliegenden Seite kann der bewegliche Kontakt 4 mit einem weiteren Kontakt 11 in Verbindung gebracht werden, so dass der bewegliche Kontakt 4 damit entweder mit dem festen Kontakt 6 oder dem weiteren Kontakt 11 elektrisch zusammenwirken kann. Zudem stehen der obere feste Kontakt 6 und der untere feste Kontakt 7 elektrisch in Verbindung. Dazwischenliegend ist eine metallische Platte 14 angeordnet, die beiden Vakuumkammern 10 bzw. 20 voneinander trennt. Die bekannten Kontaktfedern, die mit den Stößeln 2 und 3 zusammenwirken, sind hier aus Übersichtlichkeitsgründen nicht dargestellt. Dargestellt ist jedoch ein oberer Faltenbalg 7 und ein unterer Faltenbalg 8, die gleich oder auch unterschiedlich ausgebildet sein können. Dargestellt sind hier zudem noch mehrere Isolierkeramiken 9.

Spiegelt man die in Figur 5 beschriebene Vakuumschaltröhre auf einen Stufenschalter der Figur 4, so werden erfindungsgemäß die beiden bisher separaten Schaltelemente V3, V5 und U3 bzw. V6, V4 und U4 in nun einer einzigen Vakuumschaltröhre mit den getrennt steuerbaren Kontaktsystemen I und II zusammengefasst. Wird der Kontakt 11 der in Figur 5 abgebildeten Vakuumschaltröhre über einen Widerstand R4 mit der Wicklungsanzapfung n+1, der obere Stößel 2 mit der Lastableitung LA und der untere Stößel 3 mit der Wicklungsanzapfung n elektrisch leitend verbunden, so lässt sich dadurch der in Figur 4 beschriebene Stufenschalter besonders einfach mechanisch realisieren.

## Patentansprüche

1. Stufenschalter mit Vakuumschaltröhren zur unterbrechungslosen Umschaltung zwischen Wicklungsanzapfungen eines Stufentransformators,
wobei für jede zu schaltende Phase zwei Lastzweige vorgesehen sind,
**dadurch gekennzeichnet,**
**dass** jeder Lastzweig in einem Hauptstromzweig einen als Hauptkontakt wirkenden Vakuumschaltkontakt und ein in Reihe dazu schaltbares mechanisches Schaltmittel aufweist,
**dass** für jede zu schaltende Phase ein dem entsprechenden Lastzweig parallel schaltbarer Hilfsstromzweig vorgesehen ist,
**dass** jeder Hilfsstromzweig im stromführenden Zustand wenigstens einen Überschaltwiderstand und einen als Hilfskontakt wirkenden Vakuumschaltkontakt aufweist
**dass** sowohl der Hauptstromzweig als auch der Hilfsstromzweig jedes Lastzweiges mit einer gemeinsamen Lastableitung verbindbar ist,
**dass** in jedem Lastzweig mindestens ein Vakuumschaltkontakt (V1; V2; V3 und V5; V4 undV6) eines Haupt- oder Hilfsstromzweiges und ein entsprechend in Reihe dazu schaltbares, weiteres mechanisches Schaltmittel (U1; U2; U3;U4) baulich in einer einzigen Vakuumschaltröhre mit zwei separat beweglichen Kontaktsystemen (I und II) in einem gemeinsamen, die gesamte Vakuumschaltröhre umschließenden Gehäuse (1) angeordnet sind
und **dass** die separaten Kontaktsysteme (I und II) in getrennten Vakuumkammern (10; 20) angeordnet sind.

2. Stufenschalter nach Anspruch 1,
**dadurch gekennzeichnet,**
**dass** das erste Kontaktsystem (I) das mechanische Schaltmittel (U1 oder U2) und das zweite Kontaktsystem (II) den Vakuumschaltkontakt (V1 oder V2) bildet.

3. Stufenschalter nach Anspruch 1,
**dadurch gekennzeichnet,**
**dass** das erste Kontaktsystem (I) die zwei Vakuumschaltkontakte (V3 und V5, bzw. V4 und V6) umfasst und das zweite Kontaktsystem (II) jeweils ein mechanisches Schaltmittel (U3 oder U4) bildet.

## Claims

1. Tap changer with vacuum switching tubes for uninterrupted changeover between winding taps of a tapped transformer,
wherein two load branches are provided for each phase to be switched,
**characterised in that**
each load branch comprises in a main current branch a vacuum switching contact, which acts as a main contact, and a mechanical switching means connectible therewith in series,
for each phase to be switched an auxiliary current branch connectible in parallel with the corresponding load branch is provided,
each auxiliary current branch in the current-conducting state comprises at least one switch-over resistance and a vacuum switching contact acting as an auxiliary contact,
not only the main current branch, but also the auxiliary current branch of each load current branch is connectible with a common load diverter,
in each load branch at least one vacuum switching contact (V₁; V₂; V₃ and V₅; V₄ and V₆) of a main or auxiliary current branch and a further mechanical switching means (U_{1;} U₂; U₃; U₄) correspondingly connectible in series therewith are arranged, constructionally combined into a single vacuum switching tube with two separately movable contact systems (I and II), in a common housing (1) enclosing the entire vacuum switching tube and
the separate contact systems (I and II) are arranged in separate vacuum chambers (10; 20).

2. Tap changer according to claim 1, **characterised in that** the first contact system (I) forms the mechanical switching means (U₁ or U₂) and the second contact system (II) forms the vacuum switching contact (V₁ or V₂).

3. Tap changer according to claim 1, **characterised in that** the first contact system (I) comprises the two vacuum switching contacts (V₃ and V₅ or V₄ and V₆) and the second contact system (II) respectively forms a mechanical switching means (U₃ or U₄).

## Revendications

1. Commutateur à gradins équipé de tubes de commutation sous vide destiné à permettre d'effectuer une commutation sans interruption entre des prises d'enroulement d'un transformateur à gradins,
deux branches de charge étant prévues pour chaque phase à commuter,
**caractérisé en ce que**
chaque branche de charge comprend dans une branche de courant principale un contact de commutation sous vide agissant en tant que contact principal, et un moyen de commutation mécanique pouvant être branché en série sur celui-ci,
pour chaque phase à commuter, il est prévu une branche de courant auxiliaire pouvant être branchée en parallèle à la branche de charge correspondante,
à l'état conducteur de courant, chaque branche de courant auxiliaire comporte au moins une résistance de passage et un contact de commutation sous vide agissant en tant que contact auxiliaire,
la branche de courant principale ainsi que la branche de courant auxiliaire de chaque branche de charge peut être reliée à une conduite d'évacuation de charge commune,
dans chaque branche de charge sont montés au moins un contact de commutation sous vide (V1, V2, V3 et V5 ; V4 et V6) d'une branche de charge principale ou d'une branche de charge auxiliaire ainsi qu'un autre moyen de commutation mécanique (U1, U2, U3, U4) pouvant être branché en série sur celui-ci, dans un seul tube de commutation sous vide ayant deux systèmes de contact mobiles séparément (I et II) ce dans un boîtier commun (1) entourant la totalité du tube de commutation sous vide, et les systèmes de contact séparés (I et II) sont montés dans des chambres à vide (10, 20) séparées.

2. Commutateur à gradins conforme à la revendication 1,
**caractérisé en ce que**
le premier système de contact (I) forme le moyen de commutation mécanique (U1 ou U2) et le second système de contact (II) forme le contact de commutation sous vide (V1 ou V2).

3. Commutateur à gradins conforme à la revendication 1,
**caractérisé en ce que**
le premier système de contact (I) renferme les deux contacts de commutation sous vide (V3 et V5 ou V4 et V6) et le second système de contact (II) forme respectivement un moyen de commutation mécanique (U3 ou U4).
